# EUROPÄISCHE PATENTANMELDUNG

(11) **EP 4 603 928 A1**
(43) Veröffentlichungstag der Anmeldung: **20.08.2025**
(21) Anmeldenummer: 25157134.5
(22) Anmeldetag: 11.02.2025
(51) Int. Cl.: G05B 19/042

(54) **VERFAHREN ZUM AUTOMATISIERTEN BEDIENEN EINER WERKZEUGMASCHINE, SOWIE WERKZEUGMASCHINE**

(30) Priorität: 19.02.2024 DE 102024104521
(71) Anmelder: HOMAG Plattenaufteiltechnik GmbH, 75365 Calw (DE)
(72) Erfinder: Buer, Benedikt, 70563 Stuttgart (DE)
(74) Vertreter: DREISS Patentanwälte PartG mbB

(57) **Zusammenfassung**

Verfahren zum automatisierten Bedienen einer Werkzeugmaschine (10), dadurch gekennzeichnet, dass es die folgenden Schritte umfasst: Erfassen einer in natürlicher Sprache von einer Bedienperson angegebenen Aufgabe, insbesondere Bearbeitungsaufgabe, durch eine Erfassungseinrichtung (26); Ermitteln von Verfahrensschritten, die von der Werkzeugmaschine (10) ausgeführt werden können, aus der erfassten Aufgabe, insbesondere Bearbeitungsaufgabe, mittels einer ersten Verarbeitungseinrichtung (30); Ausgeben der ermittelten Verfahrensschritte an eine Schnittstelle (36) mittels einer zweiten Verarbeitungseinrichtung (34).

## Beschreibung

Die Erfindung betrifft ein Verfahren zum automatisierten Bedienen einer Werkzeugmaschine sowie eine Werkzeugmaschine nach den Oberbegriffen der nebengeordneten Patentansprüche.

Vom Markt her sind Werkzeugmaschinen beispielsweise in Form von Plattenaufteilsägen bekannt, die eine Eingabe- und Ausgabeeinrichtung mit einer grafischen Bedienoberfläche aufweisen, mit der die Werkzeugmaschine bedient werden kann. Die grafische Bedienoberfläche kann beispielsweise auf einer Eingabe- und Ausgabeeinrichtung in Form eines Touchscreens visualisiert werden. Ferner sind grundsätzlich Sprachmodelle wie GPT, LLAMA etc. bekannt, welche natürlich geschriebene Sprache verarbeiten und hierauf basierend Textausgaben erzeugen können. Solche Sprachmodelle werden von Sprachsteuerungen verwendet, um Anweisungen zu erledigen, die vom Benutzer in natürlicher Sprache eingegeben werden.

Die vorliegende Erfindung hat die Aufgabe, ein Verfahren zum automatisierten Bedienen eine Werkzeugmaschine sowie eine Werkzeugmaschine zur Verfügung zu stellen, durch die die Bedienung der Werkzeugmaschine vereinfacht und das für die Bedienung erforderliche Fachwissen der Bedienperson reduziert werden.

Diese Aufgabe wird durch ein Verfahren und durch eine Werkzeugmaschine mit den Merkmalen der nebengeordneten Ansprüche gelöst. Vorteilhafte Weiterbildungen sind in Unteransprüchen genannt.

Die Erfindung hat den Vorteil, dass die Anforderungen an die Ausbildung der Bedienperson gegenüber herkömmlichen Werkzeugmaschinen deutlich reduziert werden können, wodurch der Kreis der möglichen Bedienpersonen erweitert wird. Darüber hinaus müssen die für die Bedienung der Werkzeugmaschine in Frage kommenden Bedienpersonen mit reduziertem Aufwand geschult werden, wodurch Kosten gespart werden. Auch wird die Bedienung der Werkzeugmaschine beschleunigt, und die Häufigkeit von Bedienungsfehlern wird reduziert. Dabei können unter Umständen auch komplexe Bedienabläufe automatisiert werden.

Konkret wird dies erreicht durch ein Verfahren zum automatisierten Bedienen einer Werkzeugmaschine. Es wird also durch die Erfindung nicht der Betriebsablauf der maschinellen Komponenten der Werkzeugmaschine automatisiert, sondern es wird die eigentliche Bedienung der Werkzeugmaschine durch die Bedienperson automatisiert. Es gibt also einen Automatisierungsschritt zwischen dem von der Bedienperson geäußerten Bearbeitungswunsch und den zur Ausführung dieses Bearbeitungswunsches notwendigen Verfahrensschritten, beispielsweise der Reihenfolge und/oder der Auswahl der notwendigen Verfahrensschritte. Der Begriff des "automatisierten" Bedienens beinhaltet dabei, dass zum Teil die Bedienung der Maschine mittels computererzeugter Schritte durchgeführt wird.

Bei der Werkzeugmaschine handelt es sich typischerweise um eine solche Werkzeugmaschine, mit der in mehreren meist aufeinander folgenden, bisweilen aber auch gleichzeitigen Bearbeitungsschritten ein Ausgangswerkstück durch ein Werkzeug oder durch mehrere Werkzeuge bearbeitet werden kann. Eine Werkzeugmaschine kann aber auch eine solche Vorrichtung sein, mit der in mehreren Verfahrensschritten ein Werkstück mit einem Werkzeug automatisch gehandhabt werden kann. Insofern kann auch ein Werkstücklager, bei dem ein Werkstück beispielsweise mit einem Werkzeug in Form eines Greifers oder einer Transporteinrichtung gehandhabt wird, im vorliegenden Zusammenhang als Werkzeugmaschine betrachtet werden. Ein typisches und besonders bevorzugtes Beispiel für eine solche Werkzeugmaschine ist eine Plattenaufteilanlage, insbesondere eine Plattenaufteilsäge. Mit einer solchen können typischerweise großformatige Platten in Werkstücke aufgeteilt werden, die beispielsweise zur Herstellung von Möbeln eingesetzt werden. Ein weiteres typisches und besonders bevorzugtes Beispiel ist ein automatisches Plattenlager für eine solche Plattenaufteilanlage.

Das erfindungsgemäße Verfahren umfasst als Schritt a das Erfassen einer in natürlicher Sprache von einer Bedienperson angegebenen Aufgabe, insbesondere Bearbeitungsaufgabe, durch eine Erfassungseinrichtung. Der Begriff "natürliche Sprache" beinhaltet, dass die Bedienperson die Aufgabe bzw. Bearbeitungsaufgabe beispielsweise mit den ihr gebräuchlichen Worten und/oder in ganzen Sätzen mit Subjekt, Prädikat und Objekt beschreibt, ohne gezwungen zu sein, bestimmte Schlüsselworte zu verwenden (wobei die Verwendung von Schlüsselworten die Erfassung vereinfacht). Die Aufgabe bzw. Bearbeitungsaufgabe kann dabei in gesprochener Sprache oder in geschriebener Sprache angegeben werden. Im ersten Fall wäre die Erfassungseinrichtung typischerweise ein Mikrofon, im zweiten Fall typischerweise eine Tastatur. Möglich wäre auch eine Kombination. Denkbar ist ferner die Angabe der Aufgabe bzw. Bearbeitungsaufgabe in Form von Gesten der Bedienperson, die dann von einer Kamera erfasst werden würden. Die Aufgabe bzw. Bearbeitungsaufgabe kann beispielsweise durch ein gewünschtes Endprodukt einer Bearbeitung definiert sein oder durch einen sonstigen möglichst eindeutigen Zielzustand eines Werkstücks oder unter Umständen auch der Werkzeugmaschine selbst. Hierzu gehört beispielsweise eine Umkonfiguration der Werkzeugmaschine, beispielsweise ein Werkzeugwechsel. Auch ein Umrüsten oder Einrichten der Werkzeugmaschine sowie eine Bewegung innerhalb der Werkzeugmaschine oder eines einzelnen Aggregats der Werkzeugmaschine oder eine Änderung des Steuerungszustands der Werkzeugmaschine können hierzu gehören.

Das erfindungsgemäße Verfahren umfasst ferner als Schritt b das automatische Ermitteln von Verfahrensschritten, die von der Werkzeugmaschine ausgeführt werden können, aus der erfassten Aufgabe bzw. Bearbeitungsaufgabe mittels einer ersten Verarbeitungseinrichtung. Hierzu verfügt die erste Verarbeitungseinrichtung typischerweise über ein software- und insbesondere KI-basiertes Sprachmodell, welches erfassten und erkannten Worten und ihrem erfassten und erkannten Kontext automatisch einen spezifischen Bedeutungsinhalt zuordnen kann. Mittels des zugeordneten Bedeutungsinhalts können dann beispielsweise unter Berücksichtigung von Wahrscheinlichkeiten und/oder unter Verwendung von KI in einer Datenbank hinterlegte Verfahrensschritte automatisch ausgewählt und/oder parametriert und insoweit ermittelt werden. Es werden also solche Verfahrensschritte ermittelt, welche die angegebene Aufgabe bzw. Bearbeitungsaufgabe lösen.

Dabei können auch bekannte Optimierungsalgorithmen eingesetzt werden, die die Verfahrensschritte beispielsweise unter Berücksichtigung eines vorgegebenen Optimierungsparameters oder unter Berücksichtigung mehrerer vorgegebener Optimierungsparameter auswählen. Auch die Reihenfolge der Verfahrensschritte kann unter Berücksichtigung von Wahrscheinlichkeiten automatisch ausgewählt werden, und/oder kann mittels eines typischen Optimierungsalgorithmus unter Berücksichtigung vorgegebener Optimierungsparameter bestimmt werden. Als Optimierungsparameter kommen beispielsweise Geschwindigkeit, Energieeinsatz, Materialeinsatz, etc., infrage.

Am Beispiel einer Plattenaufteilsäge kann eine Bedienperson beispielsweise die folgende Bearbeitungsaufgabe eingeben, die dann durch die Erfassungseinrichtung erfasst wird:
*"Ich möchte einen Plattenstreifen aus unbeschichtetem Spanmaterial herstellen mit 10 mm Dicke, 800 mm Länge und 200 mm Breite. Der Plattenstreifen soll auf seiner Oberseite quer zu seiner Längsrichtung eine durchgehende Nut mit rechteckigem Querschnitt aufweisen, die eine Tiefe von 2 mm und eine Breite von 10 mm aufweist. Die eine Nut soll bei einer Länge von 200 mm des Plattenstreifens sein, die andere Nut bei einer Länge von 600 mm des Plattenstreifens."*

Die erste Verarbeitungseinrichtung erzeugt nun aus dieser Bearbeitungsaufgabe automatisch einen Vorschlag für entsprechende Verfahrensschritte, die von der Plattenaufteilsäge ausgeführt werden können. Dieser Vorschlag kann beispielsweise wie folgt aussehen:
- Anfordern einer unbeschichteten Rohplatte aus Spanmaterial mit 10 mm Dicke aus einem Plattenlager in die Werkzeugmaschine.
- Positionieren der Rohplatte relativ zu einem Sägeaggregat mittels einer Positioniereinrichtung zur Durchführung eines ersten Längsschnitts mittels des Sägeaggregats.
- Positionieren der Rohplatte relativ zu dem Sägeaggregat mittels der Positioniereinrichtung zur Durchführung eines zweiten Längsschnitts in einem Abstand von 200 mm vom ersten Längsschnitt mittels des Sägeaggregats.
- Drehen des Plattenstreifens um 90° mittels einer Dreheinrichtung.
- Positionieren des Plattenstreifens relativ zum Sägeaggregat mittels der Positioniereinrichtung so, dass ein erster Querschnitt mittels des Sägeaggregats durchgeführt wird.
- Positionieren des Plattenstreifens relativ zum Sägeaggregat mittels der Positioniereinrichtung so, dass ein zweiter Querschnitt in einem Abstand von 800 mm vom ersten Querschnitt mittels des Sägeaggregats durchgeführt wird.
- Transportieren des hergestellten Plattenstreifens zu einem Fräsaggregat.
- Positionieren des Plattenstreifens relativ zum Fräsaggregat.
- Einbringen der ersten quer verlaufenden Nut mit 2 mm Tiefe und 10 mm Breite bei einer Längenposition des Plattenstreifens von 200 mm mittels des Fräsaggregats.
- Positionieren des Plattenstreifens relativ zum Fräsaggregat.
- Einbringen der zweiten quer verlaufenden Nut mit 2 mm Tiefe und 10 mm Breite bei einer Längenposition des Plattenstreifens von 600 mm mittels des Fräsaggregats.
- Fördern des fertig gestellten Plattenstreifens zu einer Ausgabestation.

Das erfindungsgemäße Verfahren umfasst als Schritt c. das Ausgeben der ermittelten Verfahrensschritte an eine Schnittstelle insbesondere mittels einer zweiten Verarbeitungseinrichtung. Die Ausgabe der ermittelten Verfahrensschritte an eine Schnittstelle gestattet es, die ermittelten Verfahrensschritte auf vielfältige Arten zu verarbeiten.

Man erkennt aus den obigen Ausführungen, dass durch die vorliegende Erfindung die Differenz zwischen dem Wissen der Bedienperson von der Aufgabe bzw. Bearbeitungsaufgabe und den der Bedienperson bekannten Möglichkeiten zu ihrer Umsetzung verringert wird. Die Bedienperson kann die Bedienung der Werkzeugmaschine somit auf das "Was", also die "Semantik" fokussieren, und die Werkzeugmaschine ermittelt automatisch das sich hieraus ergebende "Wie".

Bei einer Weiterbildung ist vorgesehen, dass die ermittelten Verfahrensschritte von der Schnittstelle zu einer Ausgabeeinrichtung automatisch übermittelt und dort ausgegeben werden. Die Ausgabeeinrichtung kann beispielsweise ein Display (bspw. Touchscreen) sein oder auch ein Lautsprecher oder ein Drucker. Somit kann die Bedienperson prüfen, ob die automatisch von der ersten Verarbeitungseinrichtung ermittelten Verfahrensschritte sinnvoll sind und die angegebene Aufgabe bzw. Bearbeitungsaufgabe lösen. Auf diese Weise wird die Zuverlässigkeit im Betrieb der Werkzeugmaschine verbessert.

Bei einer Weiterbildung hierzu ist vorgesehen, dass die ermittelten Verfahrensschritte an der Ausgabeeinrichtung als vorbelegte Bedienoberfläche visualisiert werden. Der Bedienperson werden die ermittelten Verfahrensschritte somit beispielsweise als grafisches Ablaufdiagramm dargestellt. Die Bedienperson kann dann beispielsweise einzelne Verfahrensschritte ändern, beispielsweise anders parametrieren, oder die Reihenfolge umstellen, etc.

Bei einer Weiterbildung ist vorgesehen, dass die ermittelten Verfahrensschritte von der Schnittstelle zu einer dritten Verarbeitungseinrichtung automatisch übermittelt werden und von der dritten Verarbeitungseinrichtung in von einer Maschinensteuerung verarbeitbare Maschinenbefehle umgesetzt werden. Somit wird eine direkte und automatische Abfolge geschaffen von der semantischen Angabe der Aufgabe bzw. Bearbeitungsaufgabe durch die Bedienperson bis hin zur Programmierung der Maschinensteuerung der Werkzeugmaschine für die automatische Ausführung und Erledigung der angegebenen Aufgabe bzw. Bearbeitungsaufgabe. Dabei versteht sich, dass Änderungen der ermittelten Verfahrensschritte durch die Bedienperson berücksichtigt werden.

Bei einer Weiterbildung hierzu ist vorgesehen, dass die Maschinensteuerung bestimmte erzeugte Maschinenbefehle nicht oder nicht ohne zusätzliche Bestätigung durch eine Bedienperson, und/oder erst nach Ausgabe eines Warnhinweises automatisch ausführt. Hierdurch wird die Sicherheit im Betrieb der Werkzeugmaschine erhöht. Beispielsweise kann vorgesehen sein, dass mittels der Erfindung auf sicherheitsrelevante Komponenten der Werkzeugmaschine nur beschränkt zugegriffen werden kann, oder dass sicherheitsrelevante Verfahrensschritte nicht ohne weiteres ausgeführt werden. Beispielsweise kann die Ausführung der semantischen angegebenen Aufgabe bzw. Bearbeitungsaufgabe "Bewege das Material aus der Werkzeugmaschine heraus" gesperrt werden, da hierdurch möglicherweise die Sicherheit der Bedienperson gefährdet wird.

Bei einer Weiterbildung ist vorgesehen, dass die Verfahrensschritte im Schritt b unter Verwendung eines Sprachmodells automatisch ermittelt werden, welches für den Typ der Werkzeugmaschine spezifisch ist. Hierdurch wird die Genauigkeit bei der Ermittlung der Verfahrensschritte verbessert. Beispielsweise kann das Sprachmodell für eine Werkzeugmaschine in Form einer Plattenaufteilsäge ein anderes sein als das Sprachmodell für eine Werkzeugmaschine in Form eines CNC-Bearbeitungszentrums oder in Form eines kombinierten Fräs- und Bohraggregats. Denkbar ist ferner, das Sprachmodell für eine Kombination von mehreren Werkzeugmaschinen, beispielsweise mit Werkzeugmaschinen mit unterschiedlichen Bearbeitungsverfahren, zu verwenden. Dies kommt beispielsweise im Rahmen der Arbeitsvorbereitung infrage. Dabei kann beispielsweise eine optimale Reihenfolge von Verfahrensschritten ermittelt und vorgeschlagen werden.

Bei einer Weiterbildung hierzu ist vorgesehen, dass das Sprachmodell durch in der Vergangenheit erfasste Daten, umfassend Spracheingaben einer Bedienperson und hieraus erzeugte und von der Bedienperson akzeptierte Verfahrensschritte, automatisch trainiert wird. Auch hierdurch wird die Genauigkeit bei der Ermittlung der Verfahrensschritte basierend auf der angegebenen Aufgabe bzw. Bearbeitungsaufgabe verbessert.

Bei einer Weiterbildung ist vorgesehen, dass das Verfahren vor dem Schritt b den Schritt umfasst, dass automatisch geprüft wird, ob aus der erfassten Aufgabe bzw. Bearbeitungsaufgabe die Verfahrensschritte mindestens mit einer vorgegebenen Zuverlässigkeit ermittelt werden können, und dass dann, wenn die Prüfung ergibt, dass die Verfahrensschritte nicht mindestens mit einer vorgegebenen Zuverlässigkeit ermittelt werden können, automatisch Informationen oder Fragen für eine Bedienperson erzeugt werden. Auch dies führt zu einer größeren Betriebssicherheit der Werkzeugmaschine. Denkbar ist beispielsweise, dass die Bedienperson den Grad der gewünschten Zuverlässigkeit vorgeben kann, beispielsweise in Form einer Prozentzahl oder einer qualitativen Angabe wie "genau", "sehr genau" und "extrem genau". Zum Erkennen des tatsächlichen Zuverlässigkeitsgrades können mittels entsprechender Algorithmen und/oder mittels KI beispielsweise die Sprachqualität sowie die Eindeutigkeit oder Mehrdeutigkeit der erfassten Worte bewertet werden.

Bei einer Weiterbildung ist vorgesehen, dass mindestens der Schritt b von einer Verarbeitungseinrichtung ausgeführt wird, die von der Werkzeugmaschine entfernt angeordnet ist. Hierdurch kann eine höhere Rechenleistung für eine präzisere Verarbeitung beispielsweise der natürlichen Sprache bereitgestellt werden, und es können Verbesserungen leichter implementiert werden. Dabei kann die in natürlicher Sprache angegebene Aufgabe bzw. Bearbeitungsaufgabe bzw. können die "Sprachbefehle" in einer Verarbeitungseinrichtung verarbeitet werden, die beispielsweise in einem speziellen Kunden-Rechenzentrum oder in einer "Cloud" angeordnet ist.

Zu der Erfindung gehört auch eine Werkzeugmaschine, umfassend eine Eingabeeinrichtung, mindestens eine Verarbeitungseinrichtung und eine Schnittstelle. Bei der erfindungsgemäßen Werkzeugmaschine ist die Eingabeeinrichtung dazu eingerichtet und ausgebildet, dass durch sie eine in natürlicher Sprache von einer Bedienperson angegebene Aufgabe bzw. Bearbeitungsaufgabe erfasst werden kann. Die Werkzeugmaschine umfasst ferner eine erste Verarbeitungseinrichtung, die dazu eingerichtet und ausgebildet ist, aus der eingegebenen Aufgabe bzw. Bearbeitungsaufgabe Maschinenbefehle zu erzeugen, die von einer Maschinensteuerung verarbeitbar sind, und eine zweite Verarbeitungseinrichtung, die dazu eingerichtet und ausgebildet ist, dass sie die erzeugten Maschinenbefehle an eine Schnittstelle ausgeben kann.

Nachfolgend wird eine Ausführungsform der Erfindung unter Bezugnahme auf die beigefügte Zeichnung erläutert. In der Zeichnung zeigen:
- Figur 1: eine schematische Draufsicht auf eine Werkzeugmaschine in Form einer Plattenaufteilsäge; und
- Figur 2: ein schematisches Flussdiagramm eines Verfahrens zum Betreiben der Werkzeugmaschine von Figur 1.

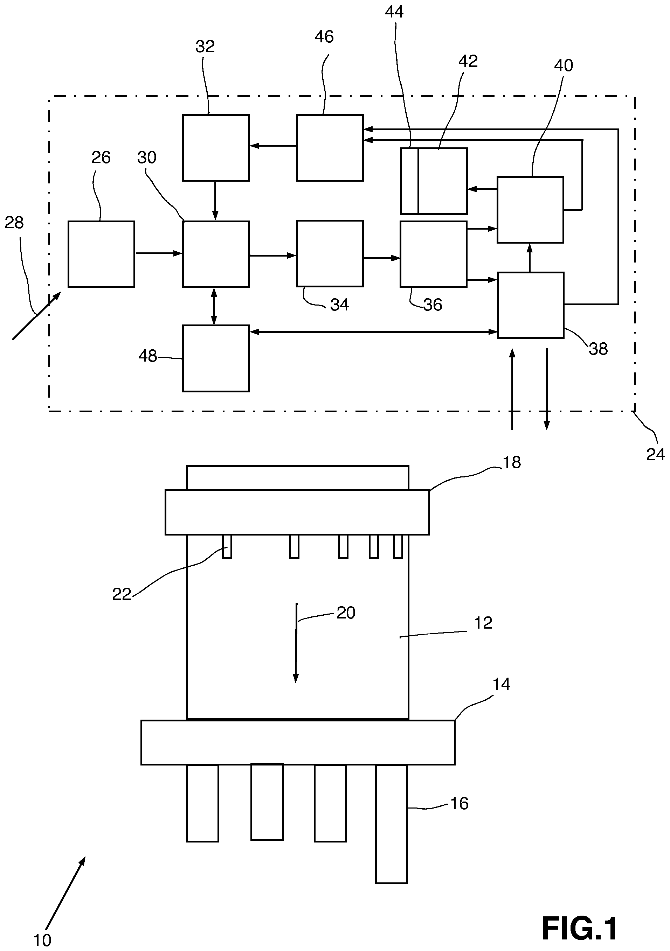

In Figur 1 trägt eine Werkzeugmaschine vorliegend beispielhaft in Form einer Plattenaufteilsäge insgesamt das Bezugszeichen 10. Die vorliegend dargestellte Plattenaufteilsäge dient zum Aufteilen großformatiger Ausgangswerkstücke, die auch als Stapel bereitgestellt werden können, in aufgeteilte Werkstücke. Diese aufgeteilten Werkstücke werden typischerweise für die Herstellung von Möbeln eingesetzt. In anderen, nicht dargestellten Ausführungsformen könnte die Werkzeugmaschine auch eine andere Maschine sein, beispielsweise ein CNC-Bearbeitungszentrum, eine Fräsmaschine, eine Bohrmaschine, oder eine Kombination aus unterschiedlichen Arten von Maschinen.

Die vorliegend beispielhaft gezeigte Plattenaufteilsäge 10 umfasst einen Zuführtisch 12, einen Maschinentisch 14 und einen aus mehreren Sektoren bestehenden Entnahmetisch 16. Ein portalartiger Programmschieber 18 ist in an sich bekannter **Art und** Weise in einer Transportrichtung 20 beweglich. Er umfasst eine Mehrzahl von Spannzangen 22, die typischerweise an einem hinteren Rand eines plattenförmigen Werkstücks angreifen können. Im Maschinentisch 14 ist typischerweise ein in der Zeichnung nicht gezeichneter Sägeschlitz vorhanden, der quer zur Transportrichtung 20 verläuft. Längst zum Sägeschlitz kann ein Sägeaggregat verschoben werden. Oberhalb von Maschinentisch 14 ist ein ebenfalls nicht gezeichneter Druckbalken vorhanden, der während eines Sägevorgangs das Werkstück zwischen Druckbalken und Maschinentisch verklemmt. Der Programmschieber 18 dient insbesondere zur Positionierung der Werkstücke relativ zum Sägeaggregat.

Zu der Werkzeugmaschine 10 gehört eine insgesamt mit 24 bezeichnete Steuer- und Regeleinrichtung. Diese kann beispielsweise durch einen oder mehrere Computer realisiert sein, die über einen oder mehrere Speicher für Programmcode, einen oder mehrere Mikroprozessoren für die Verarbeitung von Programmcode und typischerweise eine Reihe von Schnittstellen für die Eingabe und die Ausgabe von Daten und Informationen aufweisen. Teile der Steuer- und Regeleinrichtung 22 sind typischerweise in der Nähe zum Entnahmetisch 16 angeordnet, Teile können aber auch entfernt angeordnet sein, beispielsweise in einem anderen Gebäude.

Die Steuer- und Regeleinrichtung 24 umfasst mehrere Einrichtungen und Funktionsmodule, die nachfolgend vorgestellt werden: zunächst gehört zu der Steuer- und Regeleinrichtung 24 eine Erfassungseinrichtung 26. Diese ist dazu eingerichtet und ausgebildet, natürliche Sprache 28 einer Bedienperson zu erfassen. Beispielsweise kann die Erfassungseinrichtung 26 ein Mikrofon sein. Alternativ oder zusätzlich kann die Erfassungseinrichtung 26 eine Tastatur sein oder eine solche umfassen. Insbesondere ist die Erfassungseinrichtung 26 dazu eingerichtet und ausgebildet, eine in natürlicher Sprache 28 von der Bedienperson angegebene Aufgabe, insbesondere Bearbeitungsaufgabe, für die Werkzeugmaschine 10 zu erfassen.

Der Begriff "natürliche Sprache" beinhaltet, dass die Bedienperson die Aufgabe bzw. Bearbeitungsaufgabe beispielsweise mit den ihr gebräuchlichen Worten und/oder in ganzen Sätzen mit Subjekt, Prädikat und Objekt beschreibt. Die Aufgabe bzw. Bearbeitungsaufgabe kann beispielsweise durch ein gewünschtes Endprodukt einer Bearbeitung definiert sein oder durch einen sonstigen Zielzustand eines Werkstücks oder unter Umständen auch der Werkzeugmaschine 10 selbst oder durch eine Parametrisierung der Werkzeugmaschine oder einen Schaltzustand der Werkzeugmaschine o.ä..

Zu der Steuer- und Regeleinrichtung 24 gehört ferner eine erste Verarbeitungseinrichtung 30, die dazu eingerichtet und ausgebildet ist, aus der erfassten Aufgabe bzw. Bearbeitungsaufgabe Verfahrensschritte zu ermitteln, die von der Werkzeugmaschine 10 ausgeführt werden können. Hierfür steht der ersten Verarbeitungseinrichtung 30 ein Sprachmodell 32 zur Verfügung. Dieses ist vorliegend beispielhaft für den Typ der Werkzeugmaschine 10 spezifisch. Am Beispiel der vorliegend als Plattenaufteilsäge ausgebildeten Werkzeugmaschine 10 handelt es sich also um ein spezifisch für eine Plattenaufteilsäge konfiguriertes Sprachmodell 32.

Weiterhin umfasst die Steuer- und Regeleinrichtung 24 eine zweite Verarbeitungseinrichtung 34, die dazu eingerichtet und ausgebildet ist, die von der ersten Verarbeitungseinrichtung 30 ermittelten Verfahrensschritte an eine Schnittstelle 36 auszugeben. Die Schnittstelle 36 ist mit einer Ausgabeeinrichtung 38 verbunden, an die die ermittelten Verfahrensschritte automatisch von der Schnittstelle 36 übermittelt werden. An der Ausgabeeinrichtung 38 werden die ermittelten Verfahrensschritte ausgegeben. Beispielsweise kann die Ausgabeeinrichtung 38 einen Touchscreen umfassen, an dem die ermittelten Verfahrensschritte als vorbelegte Bedienoberfläche visualisiert werden.

Eine dritte Verarbeitungseinrichtung 40 ist ebenfalls Teil der Steuer- und Regeleinrichtung 24. Sie ist ebenfalls mit der Schnittstelle 36 verbunden. An sie werden also ebenfalls die ermittelten Verfahrensschritte von der Schnittstelle 36 automatisch übermittelt. Die dritte Verarbeitungseinrichtung 40 ist dazu eingerichtet und ausgebildet, die von der Schnittstelle 36 übermittelten Verfahrensschritte in Maschinenbefehle umzusetzen, die von einer Maschinensteuerung 42 der Werkzeugmaschine 10 zum automatischen Ablauf der ermittelten Verfahrensschritte verarbeitet werden können. Hierzu ist die Maschinensteuerung 42 beispielsweise mit verschiedenen Sensoren und Aktoren der Werkzeugmaschine 10 verbunden.

Die Maschinensteuerung 42 verfügt über ein Sicherheitsmodul 44, das dazu eingerichtet und ausgebildet ist, dass die Maschinensteuerung 42 bestimmte erzeugte Maschinenbefehle nicht oder nicht ohne zusätzliche Bestätigung durch die Bedienperson und/oder erst nach Ausgabe eines Warnhinweises beispielsweise an der Ausgabeeinrichtung 38 automatisch zur Ausführung bringt.

Sowohl die dritte Verarbeitungseinrichtung 40 als auch die Ausgabeeinrichtung 38, die durch die Ausgestaltung als Touchscreen vorliegen beispielhaft auch als Eingabeeinrichtung ausgebildet ist, sind ferner funktional mit einem Optimierungsmodul 46 verbunden. Dieser ist dazu eingerichtet und ausgebildet, um das Sprachmodell 32 durch in der Vergangenheit erfasste Daten, umfassend Spracheingaben einer Bedienperson und hieraus erzeugte und von der Bedienperson akzeptierte Verfahrensschritte, automatisch zu trainieren.

Schließlich sei noch auf ein Zuverlässigkeitsmodul 48 hingewiesen, welches insbesondere mit der ersten Verarbeitungseinrichtung 30 verbunden ist. Dieses ermöglicht es, dass die erste Verarbeitungseinrichtung 30 automatisch prüft, ob aus der erfassten Aufgabe bzw. Bearbeitungsaufgabe die Verfahrensschritte mindestens mit einer vorgegebenen Zuverlässigkeit erzeugt werden können. Wenn die Prüfung ergibt, dass die Verfahrensschritte nicht mindestens mit der vorgegebenen Zuverlässigkeit erzeugt werden können, dann werden automatisch Informationen und/oder Fragen für die Bedienperson erzeugt und an der Ausgabeeinrichtung 38 angezeigt.

Es versteht sich, dass die einzelnen Einrichtungen und Module, die oben beschrieben worden sind, nicht zwingend in Form separater Hardwarekomponenten ausgeführt sein müssen, sondern beispielsweise und soweit möglich durch Softwaremodule einer Recheneinrichtung in Form eines Computers oder mehrerer Computer realisiert sein können.

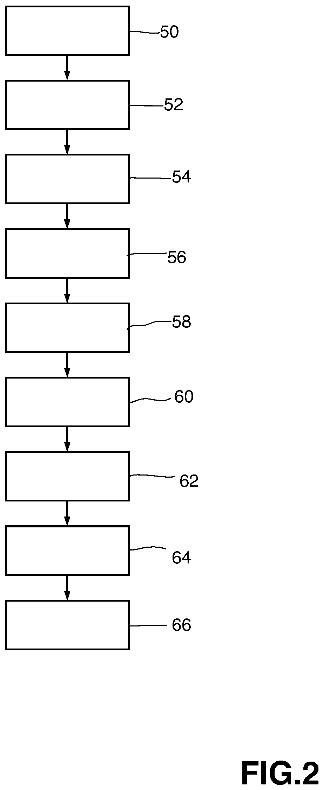

Nachfolgend wird unter Bezugnahme auf Figur 2 ein Verfahren zum Betreiben der in Figur 1 dargestellten Werkzeugmaschine 10 erläutert:
Das Verfahren beginnt in einem Start-Funktionsblock 50. In einem Funktionsblock 52 wird eine in natürlicher Sprache von der Bedienperson angegebene Aufgabe bzw. Bearbeitungsaufgabe durch die Erfassungseinrichtung 26 erfasst. In einem Funktionsblock 54 werden Verfahrensschritte, die von der Werkzeugmaschine ausgeführt werden können, aus der erfassten Aufgabe bzw. Bearbeitungsaufgabe mittels der ersten Verarbeitungseinrichtung 30 ermittelt. In einem Funktionsblock 56 werden die ermittelten Verfahrensschritte an die Schnittstelle 36 mittels der zweiten Verarbeitungseinrichtung 34 ausgegeben. In einem Funktionsblock 58 werden die ermittelten Verfahrensschritte von der Schnittstelle 36 zu der Ausgabeeinrichtung 38 automatisch übermittelt und dort ausgegeben.

In einem Funktionsblock 60 werden die ermittelten Verfahrensschritte von der Schnittstelle 36 zu der dritten Verarbeitungseinrichtung 40 automatisch übermittelt. In einem Funktionsblock 62 werden die übermittelten Verfahrensschritte von der dritten Verarbeitungseinrichtung 40 in von der Maschinensteuerung 42 verarbeitbare Maschinenbefehle umgesetzt. In einem Funktionsblock 64 werden bestimmte erzeugte Maschinenbefehle nicht oder nicht ohne zusätzliche Bestätigung durch die Bedienperson und/oder erst nach Ausgabe eines Warnhinweises automatisch ausgeführt. Das Verfahren endet in einem Ende-Funktionsblock 66.

## Patentansprüche

1. Verfahren zum automatisierten Bedienen einer Werkzeugmaschine (10), **dadurch gekennzeichnet, dass** es die folgenden Schritte umfasst:
a. Erfassen einer in natürlicher Sprache von einer Bedienperson angegebenen Aufgabe, insbesondere Bearbeitungsaufgabe, durch eine Erfassungseinrichtung (26);
b. Ermitteln von Verfahrensschritten, die von der Werkzeugmaschine (10) ausgeführt werden können, aus der erfassten Aufgabe, insbesondere Bearbeitungsaufgabe, mittels einer ersten Verarbeitungseinrichtung (30);
c. Ausgeben der ermittelten Verfahrensschritte an eine Schnittstelle (36) insbesondere mittels einer zweiten Verarbeitungseinrichtung (34).

2. Verfahren nach Anspruch 1, **dadurch gekennzeichnet, dass** die ermittelten Verfahrensschritte von der Schnittstelle (36) zu einer Ausgabeeinrichtung (38) automatisch übermittelt und dort ausgegeben werden.

3. Verfahren nach Anspruch 2, **dadurch gekennzeichnet, dass** die ermittelten Verfahrensschritte an der Ausgabeeinrichtung (38) als vorbelegte Bedienoberfläche visualisiert werden.

4. Verfahren nach wenigstens einem der vorhergehenden Ansprüche, **dadurch gekennzeichnet, dass** die ermittelten Verfahrensschritte von der Schnittstelle (36) zu einer dritten Verarbeitungseinrichtung a (40) automatisch übermittelt werden und von der dritten Verarbeitungseinrichtung (40) in von einer Maschinensteuerung (42) verarbeitbare Maschinenbefehle umgesetzt werden.

5. Verfahren nach Anspruch 4, **dadurch gekennzeichnet, dass** die Maschinensteuerung (42) bestimmte erzeugte Maschinenbefehle nicht oder nicht ohne zusätzliche Bestätigung durch eine Bedienperson, und/oder erst nach Ausgabe eines Warnhinweises automatisch ausführt.

6. Verfahren nach wenigstens einem der vorhergehenden Ansprüche, **dadurch gekennzeichnet, dass** die Verfahrensschritte im Schritt b unter Verwendung eines Sprachmodells (32) automatisch ermittelt werden, welches für den Typ der Werkzeugmaschine (10) spezifisch ist.

7. Verfahren nach Anspruch 6, **dadurch gekennzeichnet, dass** das Sprachmodell (32) durch in der Vergangenheit erfasste Daten, umfassend Spracheingaben einer Bedienperson und hieraus erzeugte und von der Bedienperson akzeptierte Verfahrensschritte, automatisch trainiert wird.

8. Verfahren nach wenigstens einem der vorhergehenden Ansprüche, **dadurch gekennzeichnet, dass** es vor dem Schritt b den Schritt umfasst, dass automatisch geprüft wird, ob aus der erfassten Aufgabe, insbesondere Bearbeitungsaufgabe, die Verfahrensschritte mindestens mit einer vorgegebenen Zuverlässigkeit erzeugt werden können, und dass dann, wenn die Prüfung ergibt, dass die Verfahrensschritte nicht mindestens mit einer vorgegebenen Zuverlässigkeit erzeugt werden können, automatisch Informationen oder Fragen für eine Bedienperson erzeugt werden.

9. Verfahren nach wenigstens einem der vorhergehenden Ansprüche, **dadurch gekennzeichnet, dass** mindestens der Schritt b durch eine Verarbeitungseinrichtung (30) ausgeführt wird, die von der Werkzeugmaschine (10) entfernt angeordnet ist.

10. Werkzeugmaschine (10), umfassend eine Erfassungseinrichtung (26), mindestens eine Verarbeitungseinrichtung (30) und eine Schnittstelle (36), **dadurch gekennzeichnet, dass** die Erfassungseinrichtung (26) dazu eingerichtet und ausgebildet ist, dass durch sie eine in natürlicher Sprache von einer Bedienperson angegebene Aufgabe, insbesondere Bearbeitungsaufgabe, erfasst werden kann, dass sie eine erste Verarbeitungseinrichtung (30) umfasst, die dazu eingerichtet und ausgebildet ist, aus der erfassten Aufgabe, insbesondere Bearbeitungsaufgabe, Verfahrensschritte zu ermitteln, die von der Werkzeugmaschine (10) ausgeführt werden können, und dass sie eine zweite Verarbeitungseinrichtung (34) umfasst, die dazu eingerichtet und ausgebildet ist, dass sie die ermittelten Verfahrensschritte an eine Schnittstelle (36) ausgeben kann.

11. Werkzeugmaschine (10) nach Anspruch 10, **dadurch gekennzeichnet, dass** sie zur Ausführung eines Verfahrens nach einem der zusätzlichen Ansprüche 2-9 ausgebildet ist.
